# EUROPEAN PATENT SPECIFICATION

(11) **EP 4 601 921 B1**
(45) Date of publication and mention of the grant of the patent: **11.11.2026**
(21) Application number: 23809724.0
(22) Date of filing: 12.10.2023
(51) Int. Cl.: B60W 40/06, B60W 40/064, B60W 40/068, B60W 40/10

(54) **A METHOD FOR DETERMINING INTERFACE CONDITIONS BETWEEN TIRE AND GROUND**
VERFAHREN ZUR BESTIMMUNG VON KONTAKTBEDINGUNGEN ZWISCHEN REIFEN UND FAHRBAHN
PROCÉDÉ DE DÉTERMINATION DES CONDITIONS DE CONTACT ENTRE PNEUMATIQUE ET SOL

(30) Priority: 14.10.2022 IT 202200021216
(43) Date of publication of application: 20.08.2025
(73) Proprietor: Easy Rain I.S.P.A., 20123 Milano (MI) (IT)
(72) Inventor: PIERALLINI, Mauro, 20123 Milano (MI) (IT); CASERINI, Stefano, 20123 Milano (MI) (IT); BLANDINA, Giovanni, 20123 Milano (MI) (IT)
(74) Representative: Buzzi, Notaro & Antonielli d'Oulx S.p.A.
(86) International application number: PCT/IB2023/060297
(87) International publication number: WO 2024/079684

(56) References cited:
- DE-A1- 102014 103 843
- DE-A1- 102020 204 833
- US-A- 5 765 119

## Description

### Field of the Invention

The present invention relates to diagnostics methods and systems for a motor vehicle. Specifically, the invention was developed with reference to the diagnostics of the interface conditions between tire and ground while the vehicle is in motion.

### Prior Art

A plurality of methods and systems are known for determining the interface conditions between tire and ground in a motor vehicle, the vast majority thereof being used in the operation of the systems for controlling the driving and/or the stability of the motor vehicle, or of the systems for autonomous or semi-autonomous driving.

All the information deriving from the implementation of such methods and such systems, however, is not sufficiently effective in predicting and contrasting some phenomena, such as aquaplaning, which are caused by specific interface conditions between tire and ground. In other words, the known methos cannot provide any information useful for predicting or contrasting this phenomenon.

Such a drawback may jeopardize the effectiveness even of the most advanced anti-aquaplaning systems (in this regard, the Applicant is the holder of various National Patent Applications, such as, **e.g.,** 102021000011108, 102021000011111, 102021000011117, or 102014902296915), since it is not possible to control the anti-aquaplaning system in such a way as to obtain a specific - and, ultimately, more effective - intervention for the aquaplaning conditions that the vehicle must tackle with, nor is it possible to make the anti-aquaplaning system ready for intervention if the conditions the vehicle is encountering indicate a high probability of the onset of an aquaplaning phenomenon.

On the other hand, with the known methods and systems, the diagnosis of the interface conditions between tire and ground with the purpose of controlling an anti-aquaplaning system is not feasible without resorting to further sensors or equipment which are not normally present on a vehicle, and which are hardly implementable due to their cost.

Finally, the diagnostics methods which are currently known are based on deductive logics which are essentially Boolean, or in any case have a high degree of discretization. If, on one hand, such logics are sufficiently robust against the perturbations on the input data, on the other hand they are prone to critical losses of information levels, which may jeopardize the final result. DE 10 2020 204833 A1 and DE 10 2014 103843 A1 disclose further methods for detecting aquaplaning situations.

### Object of the Invention

The present invention aims at solving the technical problems outlined in the foregoing. Specifically, the invention aims at providing a method for determining the interface conditions between tire and ground which enables, i.a., managing the operation of an anti-aquaplaning system without requiring the contribution of further sensors or equipment in addition to those commonly present on motor vehicles. A further object of the invention is to implement such a method in a robust fashion as regards the perturbations on the input data, without suffering from a loss of information levels.

### Summary of the Invention

The object of the invention is achieved by means of a method having the features set forth in the claims that follow, which form an integral part of the technical disclosure provided herein in relation to the invention.

### Brief Description of the Figures

The invention will now be described with reference to the annexed Figures, which are provided by way of non-limiting example only, and wherein:
- Figure 1 shows a block diagram of a method according to the invention,
- Figures 2 to 6 show block diagrams relating to the preferred implementation of first elements of the method according to the invention,
- Figures 7 and 8 show block diagrams relating to the preferred implementation of second elements of the method according to the invention,
- Figures 9 and 10 show block diagrams relating to the preferred implementation of third elements of the method according to the invention,
- Figures 11 to 15 show logical diagrams representative of the method according to the invention.

### Detailed Description

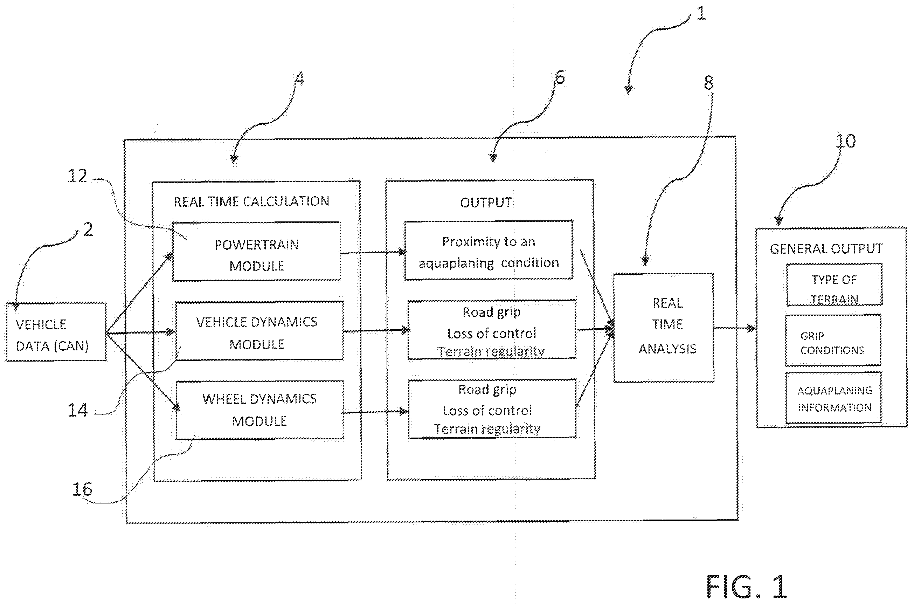

Reference number 1 in Figure 1 generally denotes a block diagram of a method for determining the interface conditions between tire and ground in a motor vehicle, particularly for determining the onset of aquaplaning phenomena, according to embodiments of the invention.

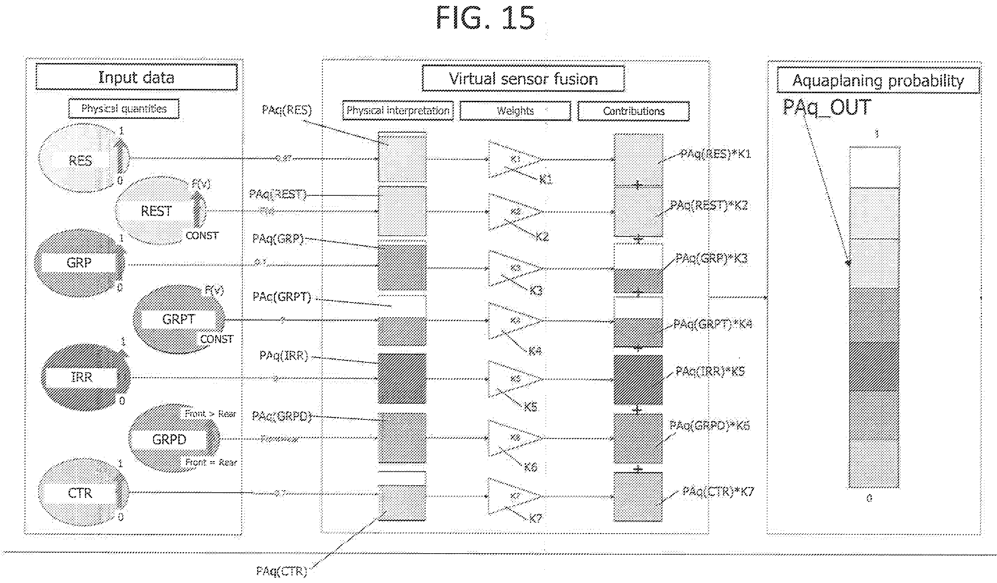

As far as a complete functional diagram is concerned - meaning by this that the various embodiments may comprise one or more of the functional blocks shown in Figure 1 and in Figure 15 - the method according to the invention is based on a set of input data 2, a real-time calculation stage 4, an intermediate set of output data 6, an analysis stage 8 (in real time), and a final set of output data 10.

The functional definition internal to each stage or set mentioned in the foregoing may vary according to the computational needs (or resources) and/or according to the control requirements for which the method is implemented with real time calculation stages.

In the embodiments which must meet the strictest computational and/or control requirements, the general structure is shown in Figure 1, wherein the stage of real-time calculation 4 comprises a first calculation module 12, configured for operating on the database of data of a power train of the vehicle, a second calculation module 14, configured for operating on the basis of general dynamics data of the vehicle, and a third calculation module 16, configured for operating on the basis of dynamics data of the individual wheels of the vehicle. According to the invention, the calculation modules 14 and 16 are optional, i.e., they can be provided in order to determine further levels of information and further output data for the method according to the invention, while module 12 is generally provided in all embodiments, since it enables - even if it cannot rely on the further levels of information deriving from modules 14 and 16 - determining a degree of proximity to an aquaplaning phenomenon of the interface conditions between tire and ground.

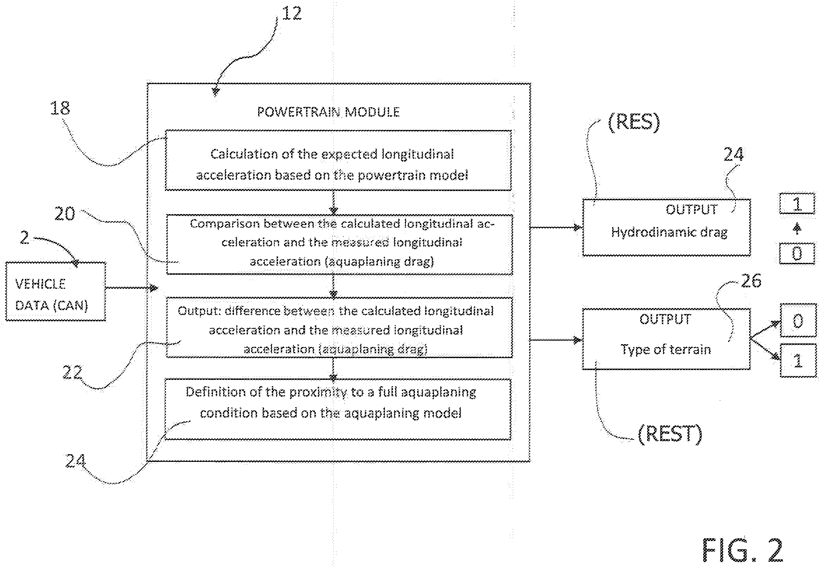

Figure 2 shows a block diagram of calculation module 12, which in the following will be denoted, for brevity, as "power train module". In the method according to the invention, the power train module 12 enables establishing a degree of proximity to an aquaplaning condition by means of an estimation of the lift acting on each wheel of the vehicle, and by means of a comparison of such lift with a threshold force value which would cause the lifting of the vehicle from the ground, i.e., the separation of the contact between tire and ground.

The functional blocks denoted by the reference numbers 18, 20, 22, 24 in Figure 2 schematically represent the method steps which carry out the determination described in the foregoing.

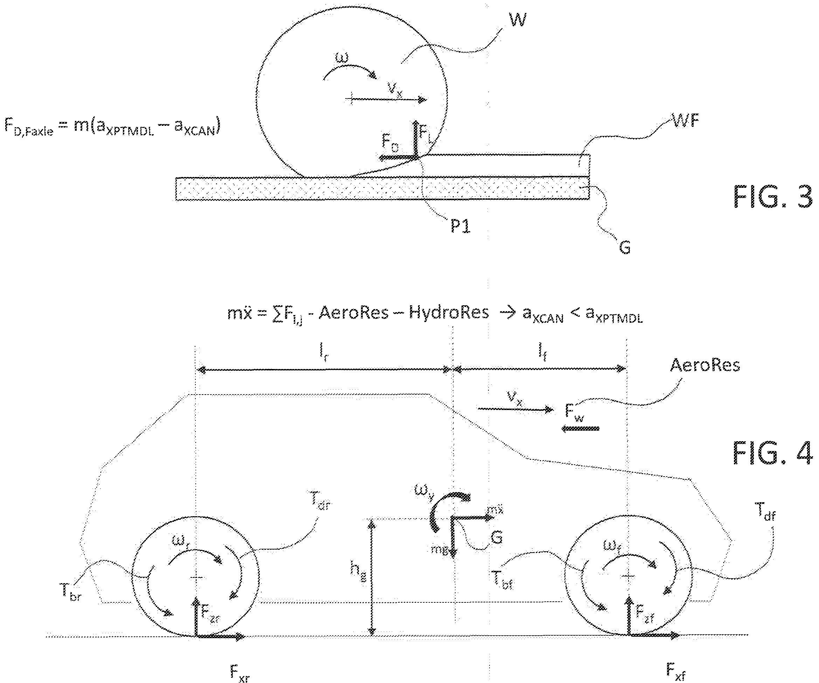

Specifically, according to the invention, the power train module is configured for processing the set of input data 2 (comprising the data and the parameters which are normally available on a CAN network, without the need of auxiliary sensors or equipment in addition to what is normally present on board the vehicle), and specifically the sub-set concerning the power train, in such a way as to:
- determining a reference longitudinal acceleration a_{XPTMDL} of the vehicle (Figures 3 and 4) - block 18
- measuring an actual longitudinal acceleration of the vehicle a_{XCAN}
- calculating a difference between the reference longitudinal acceleration a_{XPTMDL} and the actual longitudinal acceleration a_{XCAN} - blocks 20 and 22
- determining an additional drag value (which in aquaplaning is of a fluid dynamic nature) at the interface between tire and ground on the basis of said difference, and determine a lift at the interface between tire and ground on the basis of said additional drag,
- determining a threshold force at which a lifting of the tire from the ground occurs,
- comparing said lift with said threshold force, and determine a degree of proximity of the interface conditions between tire and ground to an aquaplaning condition - block 24.

Each of the steps mentioned in the foregoing will now be described in detail with reference to Figures 3 to 6.

Figure 3 schematically shows a wheel W of a motor vehicle facing a water film WF on the ground G, which acts as a theoretical reference for the method according to the invention. A point P1 on the surface of the tread of the wheel W is impinged upon by a resultant fluid dynamic force comprising a component of fluid dynamic drag F_{D} and a component of lift F_{L} which depends on the value of the fluid dynamic drag component F_{D}.

Assuming that all of the components of fluid dynamic drag act on only one axle (e.g., the front axle of the vehicle), the total drag component acting on the front axle may be expressed as ${F}_{D , Faxle} = m \left({a}_{XPTMDL}-{a}_{XCAN}\right)$ i.e., it is a funtion of the difference between the reference longitudinal acceleration a_{XPTMDL} and the actual longitudinal acceleration a_{XCAN}.

Referring to Figure 4, the global equation of the longitudinal dynamic equilibrium of the vehicle may be expressed in the following form $m {x}^{¨} = \sum {F}_{x _ ij} - AeroRes - HydroRes - Fslope$

Wherein:
ẍ is the longitudinal acceleration of the vehicle
∑F_{x_i,j} is the sum of the longitudinal forces acting on the right/left wheel (i) of the front/rear axle (j)
AeroRes is the resultant aerodynamic drag force acting on the vehicle
HydroRes is the resultant hydrodynamic drag force (due to the interaction of the tire with the water film WF).

Fslope is the resultant dragging or drawing force due to the slope of the ground (uphill or downhill). In the sign convention adopted, Fslope is positive when it is a dragging force, and it negative when it is a drawing force.

With such premises, the unknown component HydroRes may be determined by means of the difference from the reference case, wherein no water is present at the interface between tire and ground, substantially by subtracting the two following equations: ${ma}_{XPTMDL} = \sum {F}_{x_i , j} - AeroRes - Fslope \left(\begin{matrix}reference \\ case\end{matrix}\right)$ 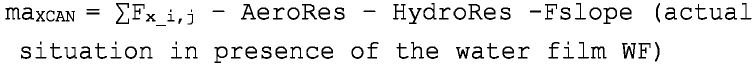 maXCAN = ∑Fx_i,j - AeroRes - HydroRes -Fslope (actual situation in presence of the water film WF) whence: $m \left({a}_{XPTMDL}-{a}_{XCAN}\right) = HydroRes = {F}_{D , Faxle}$

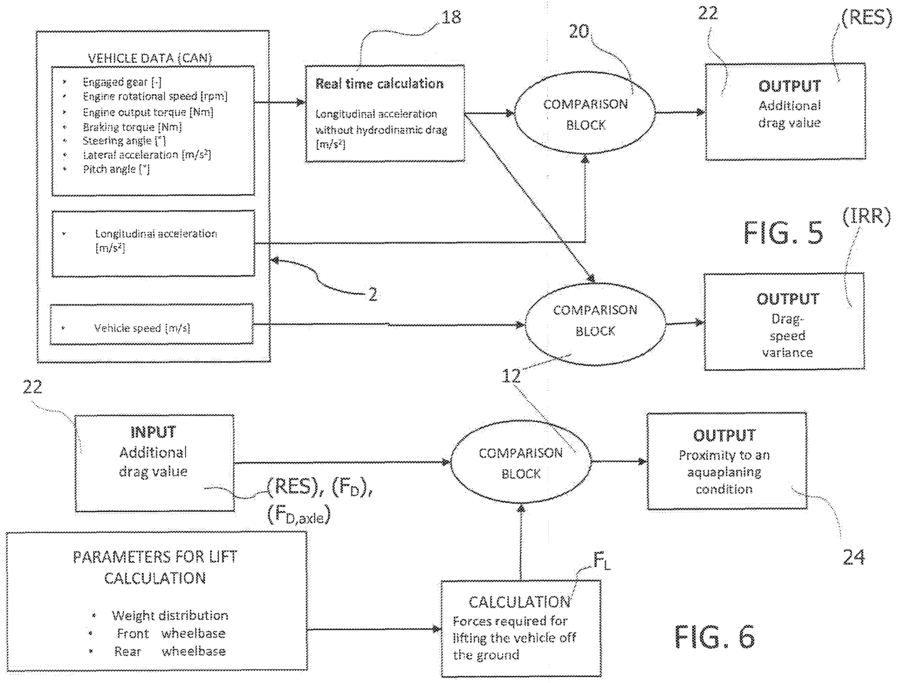

Therefore, referring to Figure 5, the CAN network of the vehicle provides a plurality of operating and dynamic parameters, including:
- the gear engaged
- the rotation speed of the engine [rpm]
- the torque delivered by the engine [Nm]
- the braking torque [Nm]
- the steering angle [à]
- the lateral acceleration [m/s²]
- the pitch angle [°]

It will be observed that such data may be derived from any data network of the vehicle, and not necessarily from the CAN network. For this reason, whenever the present description mentions the use of data present on the CAN network, it is meant that the retrieval of the data may take place from the CAN network or from any data network of the vehicle.

Therefore, by using such data it is possible to calculate in real time the value of the reference longitudinal acceleration of the vehicle a_{XPTMDL} (block 18) and to compare it with the acceleration a_{XCAN} (block 20), which is a further item of data available on the CAN network (or any other data network of the vehicle) in order to determine the value of the fluid dynamic drag F_{D,Faxle} (HydroRes) due to the water film WF (block 22).

Subsequently (Figure 6), by using the value F_{D,Faxle} it is possible to determine the lift component F_{L}, in order to compare it with a value of threshold force (lift) which is necessary to lift the tire from the ground and which strongly depends on static values for the vehicle, such as the weight distribution between the axles and on the front and rear wheelbase (distance from the center of gravity). The relationship between the values F_{D,Faxle} and F_{L} is determined during the calibration of the method and of the related calculation models.

A few remarks about the computation:
In the computation of the reference longitudinal acceleration some simplifying assumptions are preferably taken, since various parameters considered in the dynamic equilibrium equation, which may be derived from the diagram in Figure 4, may vary during the travel. For example the mass of the vehicle, as well as the rolling resistance of the individual tires, may vary as the vehicle proceeds. Generally speaking, the parameters which influence the vehicle may be calibrated during travelling. Moreover, it is possible to implement a sensor fusion logic in order to limit the influence of the physical variation of such factors to the minimum.

For example, the mass of the vehicle may be updated in real time and/or at each start based on the computations of the accelerations in low-speed manoeuvring. For example, when the engine starts it is possible to use the first manoeuvres - which are almost certainly performed at low speed (exiting a garage or a parking lot) - in order to detect the vehicle accelerations and to estimate the mass when the vehicle starts again, since the mass may differ from the last known value due e.g. to the presence of a higher number of passengers on board and/or of more fuel or luggage.

As regards the calculation of the threshold force value at which a lifting of the tire from the ground occurs, the processing burden may generally be lower, since in a wide range of conditions the variability of the vehicle mass may not significantly affect the calculation of the threshold strength value, and the weight distribution between the axles may therefore be considered reasonably constant (or anyway sufficiently constant for the calculation requirements), in the same way as the values of the front wheelbase and the rear wheelbase (these are all values that fundamentally depend on the position of the centre of mass) . Of course, a more accurate and more dynamic mapping of the position of the vehicle centre of mass and of the evolution of the vehicle mass itself lead to more accurate estimates, which may be resorted to according to needs, and specifically if the circumstances demand it.

To sum up, the following list is a summary of the input data and the output data characterizing a preferred embodiment of the power train module 12.

### Direct Input Data

- Wheel speed (the speed of the left front, right front, left rear and right rear wheels) [rpm] or [rad/s]
- Speed of advancement of the vehicle [m/s]
- Gear engaged [-]
- Engine speed [rpm] or [rad/s]
- Driving torque [Nm]
- Steering angle [°]
- Braking torque [Nm]

### Indirect Input Data

- Transverse resultant of the interface forces between tire and ground F_{y} [N] - from module 14, if present, otherwise estimated form the data on the CAN network;

### Required Parameters

- Rolling radius of the tire [m] - for each wheel;
- Transmission ratio T_ratio between the engine and the wheels (for front wheel drive or rear wheel drive vehicles), or transmission ration between engine and wheels, derived from the torque distribution between front axle and rear axle (in the case of four wheel drive vehicles);
- Mass moment of inertia of the engine [kg·m²]
- Mass moment of inertia of the wheel [kg·m²] - for each wheel
- Mass of the vehicle [kg]
- Longitudinal aerodynamic drag coefficient Cₓ [-]
- Area of the front section of the vehicle [m²]

### Output Data

- Degree of proximity to an aquaplaning condition [-] (block 24)
- Indications about the type of terrain (block 26).

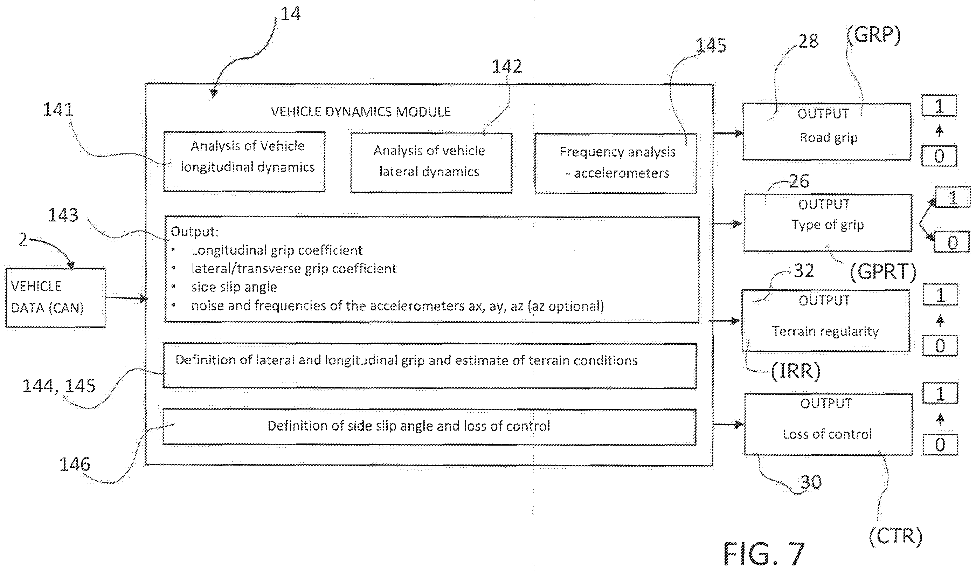

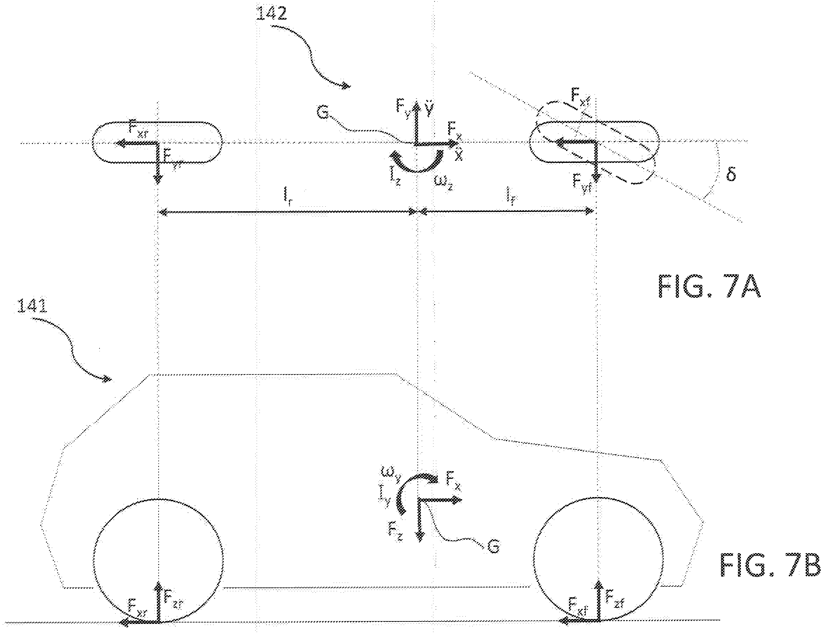

With reference to Figures 7, 8, 9, 10, there will now be described the block diagrams and the operation logics of the calculation modules 14 and 15, which respectively correspond to a dynamics module of the vehicle (14) and to a longitudinal dynamics module of the wheels (16). Such calculation modules implement, in parallel with module 12, a mapping of the driving conditions of the vehicle which will be reliable in all conditions. In other words, each calculation module 12, 14, 16 has a reliability range which does not cover the whole domain of the driving conditions of the vehicle, but which covers a subset thereof. The reliability ranges of the domains 12, 14, 16 have overlapping areas, which may be used as a means for a consistency control of the determinations performed by each module, and nonoverlapping areas, wherein the module which provides the most reliable results may be taken as a reference for the vehicle control. The reliability ranges are influenced by the quality of the sensors present on the vehicle. The more accurate the sensors (e.g., for autonomous driving), the wider the reliability range. In this regard, in the embodiments having only module 12 or not providing the integration of module 12 with modules 14, 16 in the fashion described in the foregoing, the control of the vehicle and of the anti-aquaplaning system on board is performed, if necessary, with more cautions intervention logics, in order to mitigate the effects at the boundaries of the reliability range, only based on the calculation results of module **12.**

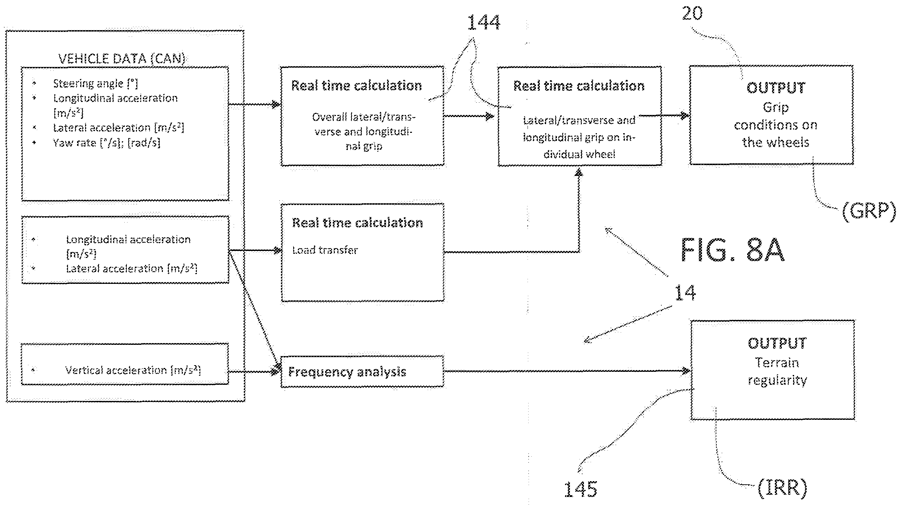

Referring to Figures 7 and 8, the dynamics module of the vehicle 14 uses again, as a set of input data, the complex of information present on the CAN network (or on another data network of the vehicle), in the same as way as module **12.**

Five main operations are performed by module 14, specifically:
- Acquiring data from the CAN network (or from another data network of the vehicle),
- Processing the longitudinal dynamics (block 141) and the transverse dynamics (block 142) of the vehicle
- Analysis of the evolution of the grip forces on the basis of the dynamics of the vehicle (block 143),
- Overall analysis of the contact with the ground (block 144),
- Analysis of the terrain regularity on the basis of the vibrations along the axis z of the vehicle (block 145)
- Defining the terrain conditions on the basis of the punctual values of grip and of the evolution thereof in time (block 146).

Module 14 is configured for processing the data on the CAN network (or on another data network of the vehicle - e.g., deriving from an inertial platform of the vehicle), so as to obtain an estimate of:
- Transverse grip (block 28)
- Longitudinal grip (block 28)
- Terrain regularity (block 32)
- Side slip (block 30)

This is useful for evaluating the global grip conditions of the vehicle, as well as for a few preliminary evaluations on the distribution among the four tires of the forces exchanged at the interface with the ground. It is to be noted that such an evaluation is independent from the variables considered in the power train module 12, and therefore, as hinted in the foregoing, module 14 may provide a different perspective and a different mapping of the dynamic state of the vehicle.

The list provided in the following summarizes the input data and the output data which characterize a preferred embodiment of the vehicle dynamics module 14.

### Direct Input Data

- Steering angle δ [°]
- Longitudinal acceleration Ẍ [m/s²]
- Transverse acceleration ÿ[m/s²]
- Yaw rate r [°/s] or [rad/s]
- Vertical acceleration *z̈* [m/s²]

### Indirect Input Data

- None

### Required Parameters

- Mass of the vehicle m [kg]
- Mass moment of inertia of the vehicle (polar moment of inertia) I_{z} [kg·m²]

- Position of the centre of mass of the vehicle (defined by l_{f} and lᵣ - the front wheelbase and the rear wheelbase - and by h_{g} - the height of the centre of mass from the ground)
- Coefficient of longitudinal aerodynamic drag Cₓ [-]
- Coefficient of vertical aerodynamic drag C_{z} [-] (which is generally very small; it can generally play a role in the calculation of the vertical forces acting on the motor vehicle, and it can ultimately influence the vertical load acting on the wheels)

### Output Data

- Transverse grip [N]
- Longitudinal grip [N]
- Drift angle [°]
- Terrain regularity [-]
- Slip

The calculation of the mass variations due to the use of the vehicle is carried out by analysing, in conditions of normal grip, the data of the torque to the wheels and of the acceleration of the vehicle. As regards the polar moment around axis z, it is possible to refer to the value provided with no need to update it during the travel, due to the low sensitivity to the variation thereof. If needed, it is possible to update the value of the polar moment of inertia around axis z based on the mass of the vehicle, which is substantially the only component participating in the calculation of the moment of inertia which may vary during driving. Specifically, the mass increase or reduction respectively generate the increase and the reduction of the polar moment of inertia. In this regard, the same considerations may be applied as for the update of the mass value of the vehicle: it may be updated by detecting the accelerations during a few reference manoeuvres (e.g. low speed manoeuvres), and may be updated based on the equations of general dynamic equilibrium of the vehicle, which take into account fixed and known parameters (e.g., the front wheelbase and the rear wheelbases) and values which are available on the inertial platform.

As regards the lateral dynamics of the vehicle, the preferential theoretical premise corresponds to the "bicycle" model shown in Figure 7A (of course, other calculation models are possible, and therefore the bicycle model must be considered an example). The theoretical reference for calculating the longitudinal dynamics of the vehicle in module 14 is shown in Figure 7B.

In the preferred embodiments, module 14 operates based on data retrieved from an inertial platform of the vehicle, which provides the components of the acceleration along axis x (ẍ, longitudinal), along axis y (ÿ, transverse) and the rotational acceleration 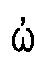 _{z} (or ṙ, since it corresponds to the time derivative of the yaw rate / yaw speed ω_{z} - which is also denoted as r):
Knowing the mass (m), the wheelbases of the centre of mass (l_{f} and lᵣ - front wheelbase and rear wheelbases) and the vehicle polar moment of inertia I_{z} (net of the approximations due to use, as mentioned in the foregoing), from a simple equilibrium to lateral translation and to rotation, by decomposing the forces on the individual wheels along x and y and by estimating the distribution of the longitudinal forces between the front wheelbase and the rear wheelbase as a function of the vertical forces during acceleration or braking (load transfer), it is possible to determine the following forces, with reference to the "bicycle" model of Figure 7A:
Fxf: longitudinal force on the front axle
Fxr: longitudinal force on the rear axle
Fyf: transverse force on the front axle
Fyr: transverse force on the rear axle.

Moreover, it is possible to determine the distribution of such forces between the right and the left side (i.e., on the individual wheels) knowing the data about the load transfer due to roll, which are equally available from the inertial platform.

Knowing the vertical forces Fz (due to the mass, the aerodynamic load and the longitudinal load transfers due to pitch - which are also known from the inertial platform, and which i.a. depend on the values of Iy, the polar moment of inertia around axis y, and ω_{y}, the pitch rate, see Figure 7B), it is possible to determine the vertical forces Fzf and Fzr acting on the front axle and on the rear axle, and ultimately the friction coefficients µ on the individual wheels of the vehicle.

From the analysis of the difference between the friction coefficient between the front axle and the rear axle it is possible to infer the presence or absence of aquaplaning conditions, since this phenomenon essentially affects the front wheels (in other low-grip conditions, such as driving on ice, the front and rear friction coefficients should be similar or equal).

The determination of the forces Fxf, Fxr, Fyf, Fyr derives in particular from the set of dynamic equilibrium equations - perfectly known in literature - which follows:
(general longitudinal and transverse equilibrium) $Fx = m {x}^{¨}$ $Fy = mÿ$
(equilibrium at transverse translation) $mÿ = Fyf + Fyr$
(equilibrium at rotation, bicycle model) ${I}_{z} \dot{r} = Fyf ⋅ {l}_{f} + Fyr ⋅ {l}_{r}$
(equilibrium at translation along axis x) $Fxf + Fxr = Fx$ with $Fxf , Fxr = function of \left(Fzf, Fzr\right)$

By dividing the transverse grip forces Fyf, Fyr by the vertical forces acting on the axles (which depend on the weight distribution on the vehicle) it is possible to estimate the coefficients of transverse grip for each axle and for each direction $μfx = Fxf / Fzf$ (longitudinal grip coefficient on the front axle)
- $μfy = Fyf / Fzf$ (transverse grip coefficient on the front axle)
- $μrx = Fxr / Fzr$ (longitudinal grip coefficient on the rear axle)
- $μry = Fyr / Fzr$ (transverse grip coefficient on the rear axle).

In the presence of a steering angle δ, the grip coefficients on the front axle are calculated by decomposing the forces Fyf and Fxf along the steering direction, i.e., by recalculating the longitudinal Fxf(δ) and transverse Fyf(δ) components with respect to the middle plane of the wheel being steered, thereby obtaining $Fyf \left(δ\right) = Fyf ⋅ sen \left(δ\right) + Fxf ⋅ cos \left(δ\right)$ $Fxf \left(δ\right) = Fxf ⋅ cos \left(δ\right) - Fyf ⋅ sen \left(δ\right)$

As has already been observed with reference to module 12, in the calculation some simplifying assumptions are made, since various parameters participating in the dynamic equilibrium equation which may be written with reference to the diagram of Figures 7A, 7B may vary while driving. For example, the position of the centre of mass may vary during the travel, and generally speaking it would be necessary to cyclically update the values of the parameters which affect the dynamic equilibrium of the vehicle. As regards the discretization of various types of terrain, the accurate knowledge of such values is not necessary.

Of course, if the computational burden is not a problem and if it is possible to continuously determine the output data, it will be necessary to update such vehicle parameters which may vary during the drive according to one or models available in literature and currently utilized in the electronic control of the vehicle dynamics.

It is possible to set a balance of the dynamic equilibrium in order to define the mean value of the force discharged to the ground by each tire, of course averaged by the distribution of the weights along the vehicle and only depending on the input values from the inertial platform.

Once the grip coefficients on each wheel have been determined, they are analysed according to the diagrams shown in Figure 8A and in Figure 8B. In the case of Figure 8A, the computation corresponds to an analysis of the absolute value of the grip coefficients on the four wheels. In the case of Figure 8B, the computation corresponds to a differential analysis between the grips of the front axle and of the rear axle. This also allows to simultaneously carry out a first analysis of the ground conditions. For example, if a longitudinal grip coefficient of 1.1 is detected, it is reasonable to exclude the presence of ice on the ground. On the other hand, if the vehicle is about to face an aquaplaning phenomenon, the computation of the longitudinal grip coefficients yields values which may be confused with the presence of ice on the road. In this regard, the quantitative analysis generally summarized in Figure 8A is combined with the logical analysis as per Figure 8B. The purpose of such an analysis is to determine the differences in the longitudinal grip coefficient between the front axle and the rear axle. The theoretical premises directly derive from the physics of the aquaplaning phenomenon: the latter essentially affects the front axle of the vehicle, while the rear axle is only marginally affected, because almost all the water film is wiped away by the passage of the front axle. Due to such a consideration it is possible to differentiate the various types of terrain from one another, and it is also possible to differentiate the presence of one of such terrains from an aquaplaning condition.

Moreover, it is possible to analyse the variation of the friction coefficient depending on the speed. Most terrain conditions (dirt road, tarmac, snow, ice) do not cause a remarkable variation of the friction with the driving speed. On the contrary, aquaplaning causes a friction which is similar to wet tarmac until the gliding speed is reached (i.e., a speed at which the lift is higher than the threshold value mentioned in the foregoing, therefore generating a lifting of the vehicle axle), whereat the friction suddenly drops.

The last function of the module is calculating the terrain irregularity, which once again may help discriminate the conditions of the terrain. In this case, the frequencies recorded along axis z are taken as a reference.

An irregular terrain will exhibit a great variance of the signal around its average, while a more regular terrain will exhibit more constant values. The same concept may indicate either a high-frequency terrain irregularity (dirt, gravel) or a low-frequency irregularity (dips, bumps).

The irregularity may be measured either by referring to a direct measurement (acceleration along axis z) or to an indirect measurement (the component on z which is contained in the measurements of x and y).

Module 16 (or "wheel module") has the function of repeating the evaluation of the grip coefficients of the driving wheels, with the same aim as module 14 (i.e., discriminating different terrains according to the grip coefficient), but it performs the calculation by means of other parameters available on the data network of the vehicle (CAN network or other networks), in order to increase the level of reliability in critical situations.

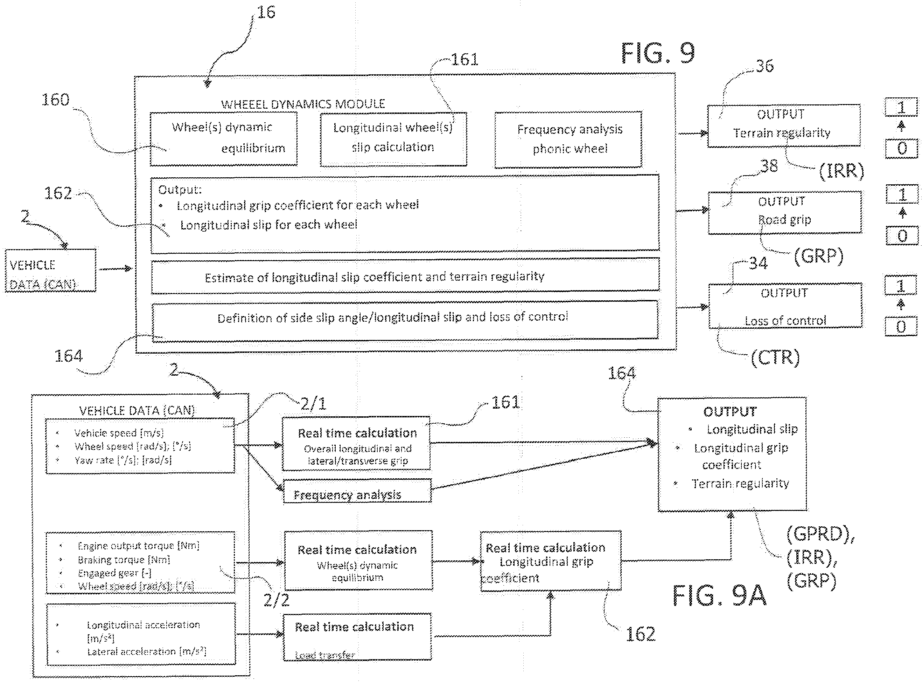

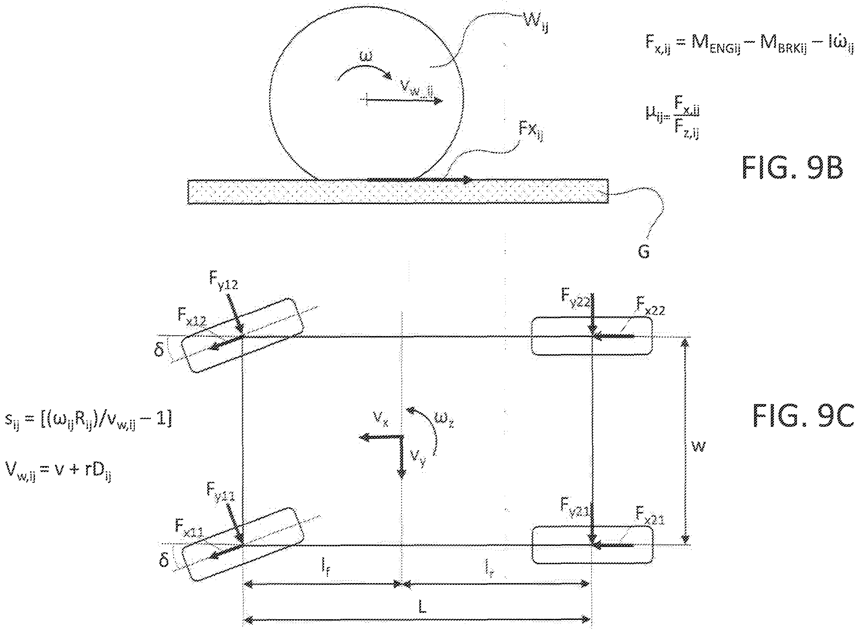

Referring to Figures 9 and 9A, the wheel module 16 uses again, as a set of input data, the complex of information available on the CAN network (or another network of the vehicle), exactly in the same way as module 12 and module 15.

Module 16 performs five main operations, specifically:
- Acquiring data from the CAN network (or from another network of the vehicle)
- Determining the slip of each wheel
- Calculating the dynamic equilibrium of each driving wheel and the longitudinal grip/friction coefficient
- Analysing the loss of control
- Analysing the terrain regularity
- Defining the conditions of the terrain.

Module 16 is therefore configured for processing the data on the CAN network (or on another network of the vehicle) in such a way as to obtain:
- an indication based on the slip, which defines a condition of grip loss potentially caused by a terrain having a low grip coefficient, in order to send, to the other modules 12, 14, the identification of the reasons for the loss of control
- an indication about the forces acting on the dynamic equilibrium for each wheel: the grip/friction coefficient is calculated based on the power train
- an indication about the terrain regularity.

To sum up, and to partially anticipate the further discussion, the following list summarizes the input data and the output data which characterize a preferred embodiment of the wheel module **16.**

### Direct Input Data

### Set 1

- Speed of the wheels (front left, front right, rear left, rear right) [rpm] or [rad/s]
- Driving speed of the vehicle [m/s]

### Set 2

- Gear engaged [-]
- Speed of the wheels (front left, front right, rear left, rear right) [rpm] or [rad/s]
- Driving torque [Nm]
- Braking torque [Nm]

### Set 3

Longitudinal acceleration [m/s²]
Transverse acceleration [m/s²]

### Indirect Input Data

- None

### Required Parameters

- Rolling radius of the wheel [m] or [mm];
- Transmission ratio T_ratio between engine and wheels (for front-drive or rear-drive vehicles), or transmission ratio between engine and wheels, derived from the torque distribution ratio between the front axle and the rear axle (in case of four wheel drive vehicles);
- Mass moment of inertia of the wheel I_{zW} [kgm²];

### Output Data

- Longitudinal grip [N];
- Longitudinal slip [-];
- Indication of terrain regularity [-].

The function of the wheel module 16 consists in synergically cooperating with the vehicle dynamics module 14 in a calculation relating to the longitudinal dynamics of the vehicle, so as to widen the range of effectiveness of both and to integrate them with module 12 (which essentially regards the longitudinal dynamics), in order to widen the range of global effectiveness of the method according to the invention.

For example, in the case of a strong braking action, it is difficult to model the behaviour of the vehicle brakes. Therefore, the calculation of the grip/friction coefficient based on the analysis of the powertrain unit becomes inconsistent, while more effectiveness is exhibited by a calculation model based on the inertial platform of the vehicle, such as implemented by means of module 14.

On the other hand, conditions may be present wherein the dynamic equilibrium model of the wheel is very consistent and accurate, because the distribution of the force on the various wheels is not estimated but calculated directly.

Referring to Figure 9C, the slip is calculated based on the input data of set 1, and according to models known in literature ${Slip}_{ij} \left({S}_{ij}\right) = \left[\left({ω}_{ij}⋅{R}_{ij}\right)/{v}_{ij}-1\right]$

Wherein:
ωᵢⱼ = rotation speed of the right/left wheel (i) of the front/rear axle (j)
Rᵢⱼ = rolling radius of the right/left wheel (i) of the front/rear axle (j)
v_{w_ij} = longitudinal speed of the right/left wheel (i) of the front/rear axle (j), which equals the sum of the longitudinal speed v of the vehicle with the product of the yaw rate r by the radius of curvature Dᵢⱼ of the trajectory at the right/left wheel (i) of the front/rear axle (j).

Figure 9B shows the model of longitudinal dynamic equilibrium of the wheel, which is involved in the computational process of the wheel module 16 based on the values of module 12. As regards Figure 9C, it strictly refers to module 16 for the values describing the longitudinal dynamics of the vehicle. The values describing the transverse dynamics essentially regard module 14, such as the values Fy_ij which may be obtained from the values of transverse grip Fyf and Fyr.

More specifically, the data on the CAN network (or on another network) of the vehicle (Set 2) are used for determining the value of the longitudinal force transferred to the ground by each wheel.

The dynamic equilibrium equation is very simple: ${F}_{x _ ij} = {M}_{eng _ ij} - {M}_{brk _ ij} - {I}_{w _ ij} {ω}_{ij} ′$

Wherein:
F_{x_ij} is the longitudinal force transferred to the ground by the right/left wheel (i) of the front/rear axle (j)
M_{eng_ij} is the driving torque acting on the right/left wheel (i) of the front/rear axle (j)
M_{brk_ij} is the braking torque acting on the right/left wheel (i) of the front/rear axle (j)
I_{w_ij} is the mass moment of inertia of the right/left wheel (i) of the front/rear axle (j)
ωᵢⱼ' is the value of the angular acceleration of the right/left wheel (i) of the front/rear axle (j).

This leads to obtaining the value of the friction/grip coefficient µ_{x_ij} for each wheel, which is defined as the ratio F_{x_ij}/F_{z_ij}, wherein F_{z_ij} is the vertical load acting on the right/left wheel (i) of the front/rear axle (j), which is known from the values of set 3 which enable estimating the value of the longitudinal load transfer and of the transverse load transfer.

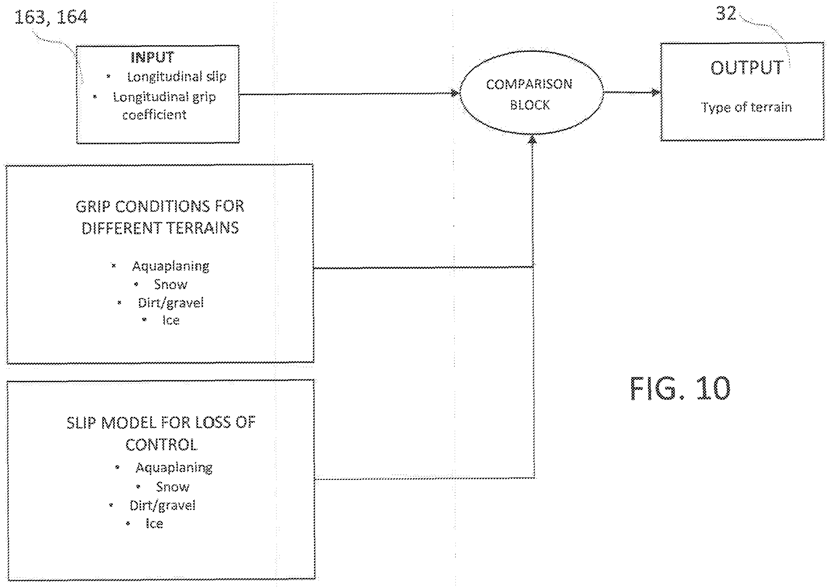

The output data of the dynamics equilibrium equation of the wheel (F_{x_ij}, µ_{x_ij}) and of the wheel slip (Sᵢⱼ) are used as input data for the following analysis, as shown in Figure 10.

In this case as well it is a matter of characterization of the terrain regularity according to a procedure similar to module 14. In this case, the reference measurement based on which the variance is calculated is not the acceleration along axis z, but the speed of the wheel compared to the speed of the vehicle. More specifically, for each wheel the instant angular speed is detected, and the latter is compared with a theoretical/expected value in the absence of slip, deriving from the instant speed of advancement of the vehicle. In the absence of slip, the detected angular speed and the theoretical/expected angular speed coincide or approximately coincide (for example due to signal noise or to small instant variations). In the case of a slip it will be possible to observe a variance of the instant angular speed with respect to the theoretical/expected angular speed. A high variance indicates an irregular terrain, because a loose or irregular terrain causes slips of the wheels which are due, i.a., to the very high variability of the interface conditions between tire and ground. Moreover, very irregular terrains cause a movement of the suspensions which results in a slight forward motion and/or rearward motion of the wheels with respect to the theoretical conditions, causing slip phenomena which increase the variance mentioned in the foregoing.

It is therefore possible to characterize the type of terrain on which the vehicle is travelling. With the performances typical of on-board sensors, it is possible to distinguish the terrains according to their high / medium / low grip/friction, wet terrain / snow / ice. Moreover, it is possible to detect irregular terrains **(e.g.,** dirt / gravel / dips / bumps / drains) thanks to the variation frequencies of the slip.

As regards the dynamic equilibrium of the vehicle, it is possible to extract a set of output data similar to what is obtained in module 14 for the longitudinal dynamics of the vehicle. As described in the foregoing, having similar output data sets from different calculation modules may improve the reliability of the system and widen the effectiveness range thereof.

Moreover, the wheel module 16 operates based on the longitudinal components of the wheels, while module 14 is configured for processing the forces transferred to the ground both laterally and longitudinally.

On the whole, the computational implementation of modules 12, 14, 16 in combination results in the availability of three sets of output data (again, refer to Figure 1, set 10)
i) Type of terrain
ii) Grip condition
iii) Information of proximity to an aquaplaning condition

Among the data sets i) - iii), the sets i) and iii) are sets of a discrete type, whereas the set ii) may be either of a continuous type (with real-time updating of such vehicle parameters which may vary during driving) or of a discrete type. In order to be able to combine the results of the three calculation modules 12, 14, 16, preferably a logical simplification is adopted which reduces each of the sets i)-iii) to a set of a discrete type.

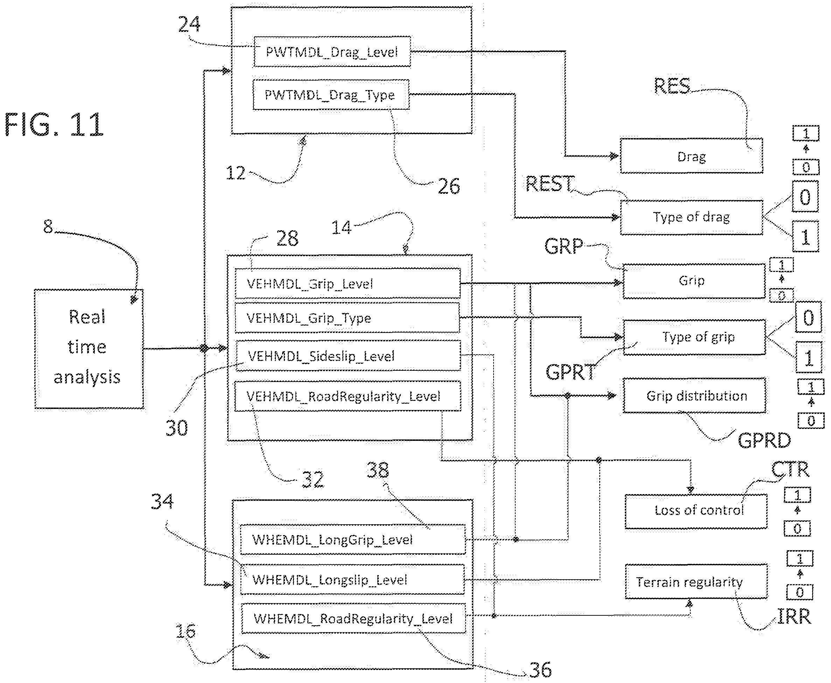

Referring to Figure 11, the following simplifications are performed.

### Set of Output Data of Module 12

PWTMDL_Drag_ (block 24): it corresponds to the value of additional drag F_{D} determined by means of the method according to the invention.

PWTMDL_Drag_Type (block 26): the value of additional drag F_{D} determined by means of the method according to the invention is also used for a first estimate of the type of terrain on which the vehicle is driving. The classification involves two levels:
- Level 0: the value of additional drag is constant with respect to the vehicle speed. It indicates loose terrains (dirt, gravel) or dry tarmac.
- Level 1: the value of additional drag increases with the vehicle speed. It is a possible indication of aquaplaning.

### Set of Output Data of Modules 14 and 16

VEHMDL_GripLevel (block 144, block 28 - module 14, transverse grip), WHEMDL_LongitudinalGrip (block 144, block 28 - module 14, longitudinal grip; block 162, block 32 - module 16, longitudinal grip): The values of the longitudinal grip force and of the transverse grip force calculated by the modules 14 and 16, which correspond to the values of the grip forces Fxf, Fxr, Fyf, Fyr and - referred to the individual wheels - to the values Fx,ij shown in Figures 9B and 9C, with i = 1 (front), 2 (rear), j = 1 (left), 2 (right), are combined into a continuous resultant, which defines an indicator of the grip exerted on the ground.

Moreover, the description in the foregoing clearly shows that the module of vehicle dynamics 14 calculates the values of both the longitudinal and the transverse grip, and therefore it is also adapted to calculate the level of longitudinal grip consequently. Therefore, the calculation of transverse grip is provided by module 14, while the calculation of longitudinal grip is provided by both modules 14 and **16.** According to the reliability of both signals respectively output from each module (which depend on the different driving conditions), it is possible to choose how much to rely on the former or on the latter reading. Only after the analysis of reliability are the values combined.

Also in this case, the grip value determined by means of the method according to the invention is also used for a first estimate of the type of terrain on which the vehicle is travelling.

The classification involves two levels (VEHMDL_GripType):
- Level 0: the grip value is constant with respect to the speed of the vehicle
- Level 1: the grip value varies with the speed of the vehicle.

In other words, if it is detected that the grip value is low even below an aquaplaning speed **(e.g. 55** km/h with slick tires), it is possible to proceed to a first determination of low grip on snow and ice rather than favour the determination of aquaplaning conditions.

VEHMDL_SideSlip (block 145, block 30 - module 14, side slip), WHEMDL_Longitudinal Slip (block 164, block 34 - module 16, longitudinal slip): they indicate the measurements of side slip (side slip of the tires / drift angle of the vehicle) and of the longitudinal slip of the tires, calculated by the modules 14 and **16.**

VEHMDL_RoadRegularityLevel and WHEMDL_RoadRegularityLevel (blocks 32, 36), on the other hand, indicate the terrain regularity. Also these signals may be used to identify the tarmac conditions.

The output signals from the estimators (Figure 11) are then combined, therefore obtaining the output of the following indicators of the interaction between the tire(s) and the ground (it will be observed that the contribution of models 12, 14, 16 to the definition of the following output information are indicated with a corresponding notation, in brackets, in the related diagrams of Figures 1-10):
- an indicator of a resistance to advancement provided by the terrain, RES; the value F_{D,Faxle} (or generally F_{D}) described in relation to module 12 is a preferred example of the indicator RES
- an indicator of the type of resistance to advancement provided by the ground REST,
- an indicator of the grip developed on ground GRP; the complex of the longitudinal grip forces Fxf, Fxr and of the transverse grip forces Fyf, Fyr is a preferred example of the indicator GRP,
- an indicator of the dependency of grip on the speed of advancement GRPT,
- an indicator of the distribution of grip between the front axle and the rear axle GRPD,
- an indicator of the terrain regularity IRR; the calculation of the acceleration variance along the vertical axis z of the vehicle is a preferred example of the indicator of the terrain regularity IRR;
- an indicator of loss of control CTR; the information comprising the measurements of the side slip (side slip of the tires / drift angle of the vehicle) and of the longitudinal slip of the tires, calculated by the modules 14 and 16, are a preferred example of data based on which it is possible to define indicator CTR.

Referring to Figure 15, for such indicators the following holds true:
- the indicator of the resistance to advancement has continuously variable values (i.e., continuous values), preferably comprised between the values 0 (minimum) and 1 (maximum), which correspond to normalized values
- the indicator of the type of resistance to advancement REST has discrete values (i.e., values which vary in a discrete fashion) which respectively represent a constant resistance (0) or a resistance dependent upon the speed of advancement (1),
- the indicator of the grip exerted on the ground GRP has continuously variable values, preferably comprised between the values 0 (minimum) and 1 (maximum), which correspond to normalized values,
- the indicator of the dependency of the grip upon the speed of advancement GRPT has discrete values (i.e., values which vary in a discrete fashion) which respectively represent either a constant grip (0) or a grip depending on the speed of advancement (1),
- the indicator of the grip distribution between the front axle and the rear axle GRPD has continuously variable values, specifically (normalized) continuously variable data comprised between a minimum (0) associated to a grip condition which is identical on the front axle and the rear axle, and a maximum value (1) associated with a grip condition which is higher on the front axle with respect to the rear axle,
- the indicator of regularity IRR has continuously variable values, comprised between the values 0 (minimum) and 1 (maximum), which correspond to normalized values,
- the indicator of loss of control CTR has continuously variable values, comprised between the values 0 (minimum) and 1 (maximum), which correspond to normalized values.

As regards the indicator of regularity IRR, it may be implemented either as a direct indicator of regularity, i.e. with minimum values (0) in the case of high irregularity and maximum values (1) in the case of high regularity, or inversely as an indicator of irregularity, i.e. with minimum values (0) in case of high regularity and maximum values (1) in case of high irregularity.

The method according to the invention, therefore, envisages the use of the output data mentioned in the foregoing as input data for a calculation logic which enables the recognition of the type of terrain. In this regard, it must be taken into consideration that the method according to the invention has so far aimed at using the conventional vehicle dynamics equations in order to obtain all the information characterizing the contact between the ground and the tire.

At this stage of the method, the information is used to "fill" corresponding "data containers" which represent the range of interface conditions occurring in the interaction of the tires with different types of terrain, including the terrains or road surfaces the conditions whereof may lead to the onset of aquaplaning events.

Therefore, an indication of the type of terrain is obtained based on a probability calculation.

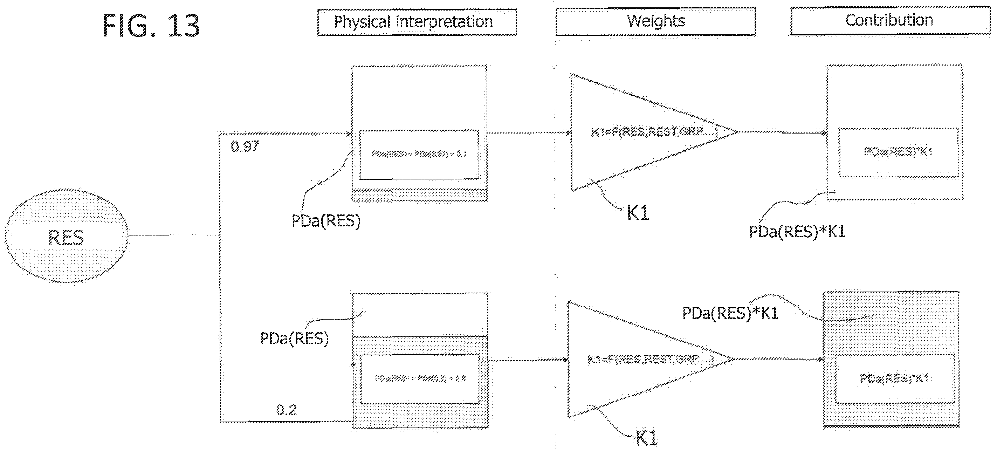

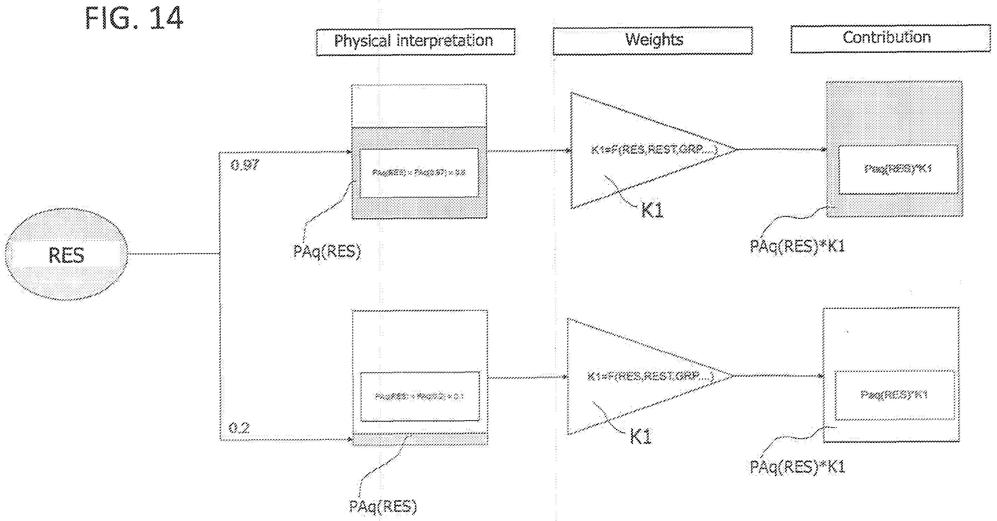

An example of this part of the method according to the invention is shown in Figures 13 and 14. Starting from the output item of data RES calculated based on the item of data PTMDL_Drag(by module 12), and normalized to values comprised between 0 and 1, let us assume that the indicator RES has a value of 0.97.

Let us then consider two "data containers" which aim at specifying the correspondence to two different terrains (in the present example, a terrain where aquaplaning takes place and a terrain of dry tarmac).

From the physical reality of the behaviour of a vehicle wheel on dry tarmac and respectively on a water film causing aquaplaning, it is known that, if RES has high values (for example 0.97, considering the normalization between 0 and 1), the vehicle is very unlikely to be moving on dry tarmac.

For this reason, as can be seen in Figure 13, a probability PDa(RES) that the vehicle is travelling on dry tarmac with a normalized drag item of data RES of 0.97 is very low, and specifically amounts to PDa(RES) = 0.1. Therefore, starting from a normalized drag item of data RES having a high value, there is obtained a low probability. (notation: P = probability function; Da = dry tarmac; (Res) = argument of the probability function)

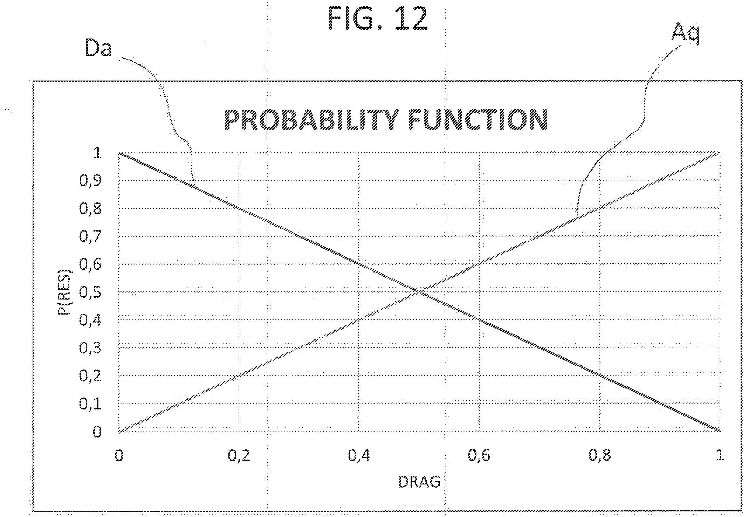

The probability function of driving on dry tarmac PDa(RES) for the indicator RES may be imagined as having a behaviour similar to what is shown in Figure 12, curve Da, while curve Aq represents the course of a probability function of an aquaplaning phenomenon PAq(RES).

The example of Figure 12 derives from the assumption that the course of the probability function is linear, but conceptually it may take on any behaviour corresponding to a specific relationship between tire and ground (tarmac, aquaplaning, ice).

As an opposed example, always referring to Figure 13, if the normalized resistance value RES is low, e.g., equal to 0.2 as in the lower branch of the diagram in Figure 13, the probability PDa(RES) will have a relatively high value; in other words, a low value of resistance to advancement is very likely to indicate a driving on dry tarmac.

Figure 14 shows the complementary instance, i.e., the calculation of a probability PAq(RES) if the values of normalized resistance RES are 0.97 and 0.2. (notation: P = probability function; Aq = aquaplaning; (Res) = argument of the probability function).

In this case, the first value will lead to a probability function having very high values (a high level of resistance to advancement is likely to indicate the drive on a water film where the aquaplaning phenomenon takes place or may take place), while the second value will lead to a probability function having very low values (a low level of resistance to advancement is unlikely to indicate the drive on a water film where the aquaplaning phenomenon takes place or may take place) .

After obtaining the probability for that particular value to be associated with a specific terrain, such value is multiplied by a weight K1 which is function of the indicators REST; GRP; IRR; RES, GRPT, CTR, GRPD, which takes into account the nominal weight of that value on a specific terrain (the resistance for aquaplaning is a predominant value, and therefore it will have a relatively high weight K1) and the reliability of that value in that specific situation (therefore, on the basis of REST; GRP; IRR; RES; GRPT; CTR; GRPD). For example, if the indicator GRP exhibits a low value (as it is an indicator of the grip developed on the ground, this indicator represents the instant grip used by the vehicle), the vehicle will be in a rest condition (constant speed). In such conditions, the power train calculation module 12 becomes very reliable. Since the indicator RES derives from the calculation module 12, the indicator RES must acquire a greater relevance.

For this reason, assuming that K1 is defined by values comprised between 0 and 1, the value will approach maximum, therefore it will be close to 1 (or to the limit 1).

The same may be true for K5, which "weighs" the result of the probability function P(IRR). Also in this case, in conditions of constant speed the variance value of the accelerometers on board the vehicle and of the rotation speed of the wheels acquire reliability and are associated with a higher weight. Generally speaking, based on the quality of the inputs and of the calculation models being applied, the coefficients K1-K7 have the function of increasing the robustness of the estimates on the final result. As regards reliability, it is envisaged to assign a higher weight to the values of probability of the onset of an aquaplaning phenomenon above a first threshold (indicating that they are plausible), and to assign a lower weight to the values of probability of the onset of an aquaplaning phenomenon below a second threshold (indicating that they are not very plausible).

For example, when the (normalized) continuous grip value GRP is low, the normalized resistance value RES is more reliable, and therefore the value of K1 will increase further.

The result of such operation is the calculation of a contribution of each indicator RST, REST, GRP, GPRT, GPRD, IRR, CTR in validating the inference of a given type of terrain.

This logical sequence may be repeated (Figure 15) for each one of the input items of data RES, REST, GRP, GRPT, IRR, CTR, GPRD and for each of the possible terrain configurations, and the calculated level of probability determines a "winner" among the various inferences made, i.e., the most probable type of terrain. In this regard, Figure 15 shows the probability functions of aquaplaning PAq(RES), PAq(REST), PAq(GRP), PAq(GRPT), PAq(IRR), PAq(CTR), PAq(GPRD) associated to each item of input data RES, REST, GRP, GRPT, IRR, CTR, GPRD, respective weights K1, K2, K3, K4, K5, K6, K7, and the weighed probability functions PAq(RES)*K1, PAq(REST)*K2, PAq(GRP)*K3, PAq(GRPT)*K4, PAq(IRR)*K5, PAq(CTR)*K6, PAq(GPRD)*K7, which define the individual contributions combined in the calculation of a final probability of aquaplaning PAq_OUT.

Finally, with regard to the latter it is possible to define a threshold value which enables obtaining the final output data which will be presented to the user/driver.

If a strategy based on the elimination of false positives is preferred, it is possible to fix a very high threshold value (e.g., 0.9). If the preference goes to a strategy with a tolerance of false positives, but without the risk of false negatives, the value of the activation threshold may be lowered (for example) to 0.6.

Therefore, the output data which may be obtained by means of the method according to the invention comprise the following (which are connected to the inference of the terrain conditions):
- aquaplaning
- partial aquaplaning
- snow
- ice
- dirt road
- dips, bumps, drains (generally speaking, concentrated irregularities of the road surface)
- paved road
- dry tarmac.

As regards the definition of the probability rules for each terrain, they are decided based on the physics of the various phenomena, which are studied a priori based on the theoretical formalization of the interaction between tire and ground, and the related probability functions may be made more accurate by using empirical data detected on the various terrains. The method according to the invention represents a definite improvement over the estimation methods based on solely Boolean logics and on discrete states. The latter calculation models, albeit envisaging a discrete sampling of the levels and consequently offering the advantage of a robustness against perturbations caused by the variation of the vehicle parameters **(e.g.,** of the mass or of the tire pressure), on the other hand are affected by a loss of information levels which are potentially useful for the final determination. The method according to the invention, as described in the foregoing, makes use of so-called "sensor fusion" techniques, which maximize the information levels available and the robustness against perturbations.

Of course, the implementation details and the embodiments may amply vary with respect to what has been described and illustrated in the foregoing, without departing from the scope of the present invention as defined by the annexed claims.

## Claims

1. A method for determining interface conditions between tire and ground in a motor vehicle, particularly to determine the onset of aquaplaning phenomena, comprising:
determining a plurality of indicators of interface conditions between tire and ground (RST, REST, GRP, GPRT, GPRD, IRR, CTR),
- calculating respective values of the indicators of interface conditions between tire and ground (RST, REST, GRP, GPRT, GPRD, IRR, CTR) of said plurality on the basis of a dynamic equilibrium of the motor vehicle
- determining, for each calculated value of said indicators of interface conditions between tire and ground of said plurality, a value of probability (PAq(RES), PAq(REST), PAq(GRP), PAq(GRPT), PAq(IRR), PAq(CTR), PAq(GPRD)) of the onset of an aquaplaning phenomenon,
- determining, for each value of probability of the onset of an aquaplaning phenomenon, a weight (K1, K2, K3, K4, K5, K6, K7), and determining a weighed value of probability (PAq(RES)*K1, PAq(REST)*K2, PAq(GRP)*K3, PAq(GRPT)*K4, PAq(IRR)*K5, PAq(CTR)*K6, PAq(GPRD)*K7) for each value of probability of the onset of an aquaplaning phenomenon by means of application of each weight (K1, K2, K3, K4, K5, K6, K7) to the respective value of probability of the onset of an aquaplaning phenomenon (PAq(RES), PAq(REST), PAq(GRP), PAq(GRPT), PAq(IRR), PAq(CTR), PAq(GPRD)),
- determining a final value (PAq_OUT) of probability of the onset of an aquaplaning phenomenon by combination of the weighed weighed values of probability (PAq(RES)*K1, PAq(REST)*K2, PAq(GRP)*K3, PAq(GRPT)*K4, PAq(IRR)*K5, PAq(CTR)*K6, PAq(GPRD)*K7)

2. The method of Claim 1, further comprising signaling the onset of an aquaplaning phenomenon when said final value (PAq_OUT) of probability of the onset of an aquaplaning phenomenon is higher than a predetermined threshold.

3. The method of Claim 1, wherein said determining, for each value of probability of the onset of an aquaplaning phenomenon, a weight (K1, K2, K3, K4, K5, K6, K7) comprises determining said weight for and as a function of each value of probability of the onset of an aquaplaning phenomenon.

4. The method of Claim 1, wherein said determining a final value (PAq_OUT) of probability of the onset of an aquaplaning phenomenon by combination of the weighed weighed values of probability (PAq(RES)*K1, PAq(REST)*K2, PAq(GRP)*K3, PAq(GRPT)*K4, PAq(IRR)*K5, PAq(CTR)*K6, PAq(GPRD)*K7) comprises operating a sum of said weighed values of probability.

5. The method of Claim 1, wherein said calculating respective values of the indicators of interface conditions between tire and ground (RST, REST, GRP, GPRT, GPRD, IRR, CTR) further comprises operating a normalization thereof in a reference range of values, preferably comprised between 0 and 1.

6. The method of any of the previous claims, wherein said determining, for each value of probability (PAq(RES), PAq(REST), PAq(GRP), PAq(GRPT), PAq(IRR), PAq(CTR), PAq(GPRD)) of the onset of an aquaplaning phenomenon, a weight (K1, K2, K3, K4, K5, K6, K7) comprises assigning a higher weight to the values of probability of onset of an aquaplaning phenomenon above a first threshold, and assigning a lower weight to the values of probability of onset of an aquaplaning phenomenon below a second threshold.

7. the method of any of the previous claims, wherein said plurality of indicators of interface conditions between tire and ground (RST, REST, GRP, GPRT, GPRD, IRR, CTR) comprises:
- an indicator of a resistance to advancement provided by the ground (RES)
- an indicator of the type of resistance to advancement provided by the ground (REST),
- an indicator of grip developed on the ground (GRP)
- an indicator of a dependency of the grip from the speed of advancement (GRPT)
- an indicator of grip distribution between front axle and rear axle (GRPD),
- an indicator of terrain regularity (IRR),
- an indicator of loss of control (CTR).

8. The method of Claim 7, wherein:
- said indicator of a resistance to advancement (RES) has continuous values,
- said indicator of the type of resistance to advancement provided by the ground (REST) has discrete values representative of, respectively, a constant resistance (0) or a resistance dependent upon the speed of advancement (1),
- said indicator of grip developed on the ground (GRP) has continuously variable values,
- said indicator of dependency of the grip from the speed of advancement (GRPT) has discrete values representative of, respectively, a constant grip (0) or a grip dependent upon the speed of advancement (1),
- said of grip distribution between front axle and rear axle (GRPD) has continuously variable values, in particular continuously variable values between a minimum associated to a grip condition identical between front axle and rear axle and a maximum value associated to a higher grip condition on the front axle with respect to the rear axle
- said indicator of ground regularity (IRR) has continuously variable values,
- said indicator of loss of control (CTR) has continuously variable values.

9. The method of Claim 7 or Claim 8, comprising:
- determining a reference longitudinal acceleration (a_{XPTMDL}) of the vehicle,
- measuring an actual longitudinal acceleration of the vehicle (a_{XCAN}),
- calculating a difference between said reference longitudinal acceleration and said actual longitudinal acceleration,
- determining an additional drag (F_{D}, PWTMDL_Drag_Level) at the interface between tire and ground on the basis of said difference, and a lift (F_{L}) at the interface between tire and ground on the basis of said additional drag (F_{D}), said additional drag defining said indicator of resistance to advancement (RES).
- determining a threshold force at which a lifting of the tire from the ground occurs,
- comparing said lift with said threshold force and determining a degree of proximity of the interface conditions between tire and ground to an aquaplaning condition.

10. The method of Claim 9, wherein said determining an additional drag (F_{D}, PWTMDL_Drag_Level) comprising determining the existence of a dependency of said additional resistance from a speed of advancement of the motor vehicle (PWTMDL_Drag_Type) to define said indicator of the type of resistance to advancement provided by the ground (REST).

11. The method of Claim 7 or Claim 8, further comprising:
- determining a longitudinal grip force of the vehicle
- determine a transverse grip force of the vehicle
- defining said indicator of grip developed on the ground (GRP) on the basis of a complex of said longitudinal grip force and transverse grip force (WHEMDL_LongGrip_Level, VEHMDL_LatGrip_Level).

12. The method of Claim 7 or Claim 8, further comprising:
- determining a vehicle side slip indicator (VEHMDL_SideSlip_Level)
- determining a longitudinal slip (WHEMDL_Slip_Level) of the vehicle tires,
- determining said indicator of loss of control (CTR) on the basis of said vehicle side slip indicator and longitudinal slip.

13. The method according to Claim 7 or Claim 8, compeising determining said indicator of ground regularity (IRR) by calculation of a variance of the vertical acceleration of the motor vehicle.

14. the method of Claim 6, further comprising activating the intervention of an anti-aquaplaning system on board the vehicle.

## Patentansprüche

1. Verfahren zur Bestimmung der Bedingungen der Grenzfläche zwischen Reifen und Untergrund bei einem Kraftfahrzeug, insbesondere zur Bestimmung des Auftretens von Aquaplaning-Phänomenen, umfassend:
Bestimmen einer Vielzahl von Indikatoren der Bedingungen der Grenzfläche zwischen Reifen und Untergrund (RST, REST, GRP, GPRT, GPRD, IRR, CTR),
- Berechnen der jeweiligen Werte der Indikatoren der Bedingungen der Grenzfläche zwischen Reifen und Untergrund (RST, REST, GRP, GPRT, GPRD, IRR, CTR) der Vielzahl auf der Grundlage eines dynamischen Gleichgewichts des Kraftfahrzeugs,
- Bestimmen für jeden berechneten Wert der Indikatoren der Bedingungen der Grenzfläche zwischen Reifen und Untergrund der Vielzahl eines Wahrscheinlichkeitswerts (PAq(RES), PAq(REST), PAq(GRP), PAq(GRPT), PAq(IRR), PAq(CTR), PAq(GPRD)) für das Auftreten eines Aquaplaning-Phänomens,
- Bestimmen für jeden Wahrscheinlichkeitswert für das Auftreten eines Aquaplaning-Phänomens eines Gewichts (K1, K2, K3, K4, K5, K6, K7) und Bestimmen eines gewichteten Wahrscheinlichkeitswerts (PAq(RES)*K1, PAq(REST)*K2, PAq(GRP)*K3, PAq(GRPT)*K4, PAq(IRR)*K5, PAq(CTR)*K6, PAq(GPRD) *K7) für jeden Wahrscheinlichkeitswert für das Auftreten eines Aquaplaning-Phänomens durch Anwenden jedes Gewichts (K1, K2, K3, K4, K5, K6, K7) auf den jeweiligen Wahrscheinlichkeitswert für das Auftreten eines Aquaplaning-Phänomens (PAq(RES), PAq(REST), PAq(GRP), PAq(GRPT), PAq(IRR), PAq(CTR), PAq(GPRD)),
- Bestimmen eines endgültigen Werts (PAq_OUT) der Wahrscheinlichkeit des Auftretens eines Aquaplaning-Phänomens durch Kombination der gewichteten Wahrscheinlichkeitswerte (PAq(RES)*K1, PAq(REST)*K2, PAq(GRP)*K3, PAq(GRPT)*K4, PAq(IRR)*K5, PAq(CTR)*K6, PAq(GPRD)*K7).

2. Verfahren nach Anspruch 1, ferner umfassend das Signalisieren des Auftretens eines Aquaplaning-Phänomens, wenn der endgültige Wert (PAq_OUT) der Wahrscheinlichkeit des Auftretens eines Aquaplaning-Phänomens höher als ein vorgegebener Schwellenwert ist.

3. Verfahren nach Anspruch 1, wobei das Bestimmen eines Gewichts (K1, K2, K3, K4, K5, K6, K7) für jeden Wahrscheinlichkeitswert für das Auftreten eines Aquaplaning-Phänomens das Bestimmen des Gewichts für und als Funktion von jedem Wahrscheinlichkeitswert für das Auftreten eines Aquaplaning-Phänomens umfasst.

4. Verfahren nach Anspruch 1, wobei das Bestimmen eines endgültigen Werts (PAq_OUT) der Wahrscheinlichkeit des Auftretens eines Aquaplaning-Phänomens durch Kombination der gewichteten Wahrscheinlichkeitswerte (PAq(RES)*K1, PAq (REST) *K2, PAq (GRP) *K3, PAq (GRPT) *K4, PAq (IRR) *K5, PAq(CTR)*K6, PAq(GPRD)*K7) das Bilden einer Summe der gewichteten Wahrscheinlichkeitswerte umfasst.

5. Verfahren nach Anspruch 1, wobei das Berechnen jeweiliger Werte der Indikatoren der Bedingungen der Grenzfläche zwischen Reifen und Untergrund (RST, REST, GRP, GPRT, GPRD, IRR, CTR) ferner das Durchführen einer Normalisierung derselben in einem Referenzwertebereich, vorzugsweise zwischen 0 und 1, umfasst.

6. Verfahren nach einem der vorhergehenden Ansprüche, wobei das Bestimmen eines Gewichts (K1, K2, K3, K4, K5, K6, K7) für jeden Wahrscheinlichkeitswert (PAq(RES), PAq(REST), PAq(GRP), PAq(GRPT), PAq(IRR), PAq(CTR), PAq(GPRD)) für das Auftreten eines Aquaplaning-Phänomens das Zuweisen eines höheren Gewichts zu den Wahrscheinlichkeitswerten für das Auftreten eines Aquaplaning-Phänomens oberhalb eines ersten Schwellenwerts und das Zuweisen eines niedrigeren Gewichts zu den Wahrscheinlichkeitswerten für das Auftreten eines Aquaplaning-Phänomens unterhalb eines zweiten Schwellenwerts umfasst.

7. Verfahren nach einem der vorhergehenden Ansprüche, wobei die Vielzahl von Indikatoren der Bedingungen der Grenzfläche zwischen Reifen und Untergrund (RST, REST, GRP, GPRT, GPRD, IRR, CTR) Folgendes umfasst:
- einen Indikator für einen durch den Untergrund bewirkten Widerstand gegen die Vorwärtsbewegung (RES),
- einen Indikator für die Art des durch den Untergrund bewirkten Widerstands gegen die Vorwärtsbewegung (REST),
- einen Indikator für die auf dem Untergrund entwickelte Haftung (GRP)
- einen Indikator für eine Abhängigkeit der Haftung von der Fahrgeschwindigkeit (GRPT)
- einen Indikator für die Haftungsverteilung zwischen Vorderachse und Hinterachse (GRPD),
- einen Indikator für die Geländeregelmäßigkeit (IRR),
- einen Indikator für den Kontrollverlust (CTR).

8. Verfahren nach Anspruch 7, wobei:
- der Indikator für einen Widerstand gegen die Vorwärtsbewegung (RES) kontinuierliche Werte hat,
- der Indikator für die Art des durch den Untergrund bewirkten Widerstands gegen die Vorwärtsbewegung (REST) diskrete Werte hat, die einen konstanten Widerstand (0) beziehungsweise einen von der Fahrgeschwindigkeit abhängigen Widerstand (1) repräsentieren,
- der Indikator für die auf dem Untergrund entwickelte Haftung (GRP) kontinuierlich variable Werte hat,
- der Indikator für die Abhängigkeit der Haftung von der Fahrgeschwindigkeit (GRPT) diskrete Werte hat, die eine konstante Haftung (0) beziehungsweise eine von der Fahrgeschwindigkeit abhängige Haftung (1) repräsentieren,
- die Haftungsverteilung zwischen Vorderachse und Hinterachse (GRPD) kontinuierlich variable Werte hat, insbesondere kontinuierlich variable Werte zwischen einem Minimum, das einem zwischen Vorderachse und Hinterachse identischen Haftungszustand zugeordnet ist, und einem Höchstwert, der einem höheren Haftungszustand an der Vorderachse gegenüber der Hinterachse zugeordnet ist,
- der Indikator für die Untergrundregelmäßigkeit (IRR) kontinuierlich variable Werte hat,
- der Indikator für den Kontrollverlust (CTR) kontinuierlich variable Werte hat.

9. Verfahren nach Anspruch 7 oder Anspruch 8, umfassend:
- Bestimmen einer Referenzlängsbeschleunigung (a_{XPTMDL}) des Fahrzeugs,
- Messen einer tatsächlichen Längsbeschleunigung des Fahrzeugs (a_{XCAN}),
- Berechnen einer Differenz zwischen der Referenzlängsbeschleunigung und der tatsächlichen Längsbeschleunigung,
- Bestimmen eines zusätzlichen Widerstands (F_{D}, PWTMDL_Drag_Level) an der Grenzfläche zwischen Reifen und Untergrund auf der Grundlage der Differenz und eines Auftriebs (F_{L}) an der Grenzfläche zwischen Reifen und Untergrund auf der Grundlage des zusätzlichen Widerstands (F_{D}), wobei der zusätzliche Widerstand den Indikator für den Widerstand gegen die Vorwärtsbewegung (RES) definiert,
- Bestimmen einer Schwellenkraft, bei der eine Anhebung des Reifens vom Untergrund eintritt,
- Vergleichen des Auftriebs mit der Schwellenkraft und Bestimmen eines Grades der Annäherung der Bedingungen der Grenzfläche zwischen Reifen und Untergrund an einen Aquaplaning-Zustand.

10. Verfahren nach Anspruch 9, wobei das Bestimmen eines zusätzlichen Widerstands (F_{D}, PWTMDL_Drag_Level) das Bestimmen des Bestehens einer Abhängigkeit des zusätzlichen Widerstands von einer Fahrgeschwindigkeit des Kraftfahrzeugs (PWTMDL_Drag_Art) zum Bestimmen des Indikators für die Art des durch den Untergrund bewirkten Widerstands gegen die Vorwärtsbewegung (REST) umfasst.

11. Verfahren nach Anspruch 7 oder Anspruch 8, ferner umfassend:
- Bestimmen einer Haftkraft in Längsrichtung des Fahrzeugs,
- Bestimmen einer Haftkraft in Querrichtung des Fahrzeugs,
- Definieren des Indikators für die auf dem Untergrund entwickelte Haftung (GRP) auf der Grundlage eines Komplexes der Haftkraft in Längsrichtung und der Haftkraft in Querrichtung (WHEMDL_LongGrip_Level, VEHMDL_LatGrip_Level).

12. Verfahren nach Anspruch 7 oder Anspruch 8, ferner umfassend:
- Bestimmen eines Fahrzeugseitenschlupfindikators (VEHMDL_SideSlip_Level),
- Bestimmen eines Längsschlupfes (WHEMDL_Slip_Level) der Fahrzeugreifen,
- Bestimmen des Indikators für den Kontrollverlust (CTR) auf der Grundlage des Fahrzeugseitenschlupfindikators und des Längsschlupfes.

13. Verfahren nach Anspruch 7 oder Anspruch 8, umfassend das Bestimmen des Indikators für die Untergrundregelmäßigkeit (IRR) durch Berechnen einer Varianz der Vertikalbeschleunigung des Kraftfahrzeugs.

14. Verfahren nach Anspruch 6, ferner umfassend das Aktivieren des Eingriffs eines Anti-Aquaplaning-Systems an Bord des Fahrzeugs.

## Revendications

1. Procédé pour déterminer des conditions d'interface entre un pneu et le sol dans un véhicule automobile, en particulier pour déterminer l'apparition de phénomènes d'aquaplanage, comprenant :
la détermination d'une pluralité d'indicateurs de conditions d'interface entre le pneu et le sol (RST, REST, GRP, GPRT, GPRD, IRR, CTR),
- le calcul de valeurs respectives des indicateurs de conditions d'interface entre le pneu et le sol (RST, REST, GRP, GPRT, GPRD, IRR, CTR) de ladite pluralité sur la base d'un équilibre dynamique du véhicule automobile
- la détermination, pour chaque valeur calculée desdits indicateurs de conditions d'interface entre le pneu et le sol de ladite pluralité, d'une valeur de probabilité (PAq(RES), PAq(REST), PAq(GRP), PAq(GRPT), PAq(IRR), PAq(CTR), PAq(GPRD)) de l'apparition d'un phénomène d'aquaplanage,
- la détermination, pour chaque valeur de probabilité de l'apparition d'un phénomène d'aquaplanage, d'un poids (K1, K2, K3, K4, K5, K6, K7), et la détermination d'une valeur pondérée de probabilité (PAq(RES)*K1, PAq(REST)*K2, PAq(GRP)*K3, PAq(GRPT)*K4, PAq(IRR)*K5, PAq(CTR)*K6, PAq(GPRD)*K7) pour chaque valeur de probabilité de l'apparition d'un phénomène d'aquaplanage par l'application de chaque poids (K1, K2, K3, K4, K5, K6, K7) à la valeur respective de probabilité de l'apparition d'un phénomène d'aquaplanage (PAq(RES), PAq(REST), PAq(GRP), PAq(GRPT), PAq(IRR), PAq(CTR), PAq(GPRD)),
- la détermination d'une valeur finale (PAq_OUT) de probabilité de l'apparition d'un phénomène d'aquaplanage par combinaison des valeurs pondérées de probabilité (PAq(RES)*K1, PAq(REST)*K2, PAq(GRP)*K3, PAq(GRPT)*K4, PAq(IRR)*K5, PAq(CTR)*K6, PAq(GPRD)*K7).

2. Procédé selon la revendication 1, comprenant en outre la signalisation de l'apparition d'un phénomène d'aquaplanage lorsque ladite valeur finale (PAq_OUT) de probabilité de l'apparition d'un phénomène d'aquaplanage est supérieure à un seuil prédéterminé.

3. Procédé selon la revendication 1, dans lequel ladite détermination, pour chaque valeur de probabilité de l'apparition d'un phénomène d'aquaplanage, d'un poids (K1, K2, K3, K4, K5, K6, K7) comprend la détermination dudit poids pour, et en fonction de, chaque valeur de probabilité de l'apparition d'un phénomène d'aquaplanage.

4. Procédé selon la revendication 1, dans lequel ladite détermination d'une valeur finale (PAq_OUT) de probabilité de l'apparition d'un phénomène d'aquaplanage par combinaison des valeurs pondérées de probabilité (PAq(RES)*K1, PAq(REST)*K2, PAq(GRP)*K3, PAq(GRPT)*K4, PAq(IRR)*K5, PAq(CTR)*K6, PAq(GPRD)*K7) comprend la réalisation d'une somme desdites valeurs pondérées de probabilité.

5. Procédé selon la revendication 1, dans lequel ledit calcul des valeurs respectives des indicateurs de conditions d'interface entre le pneu et le sol (RST, REST, GRP, GPRT, GPRD, IRR, CTR) comprend en outre la réalisation de leur normalisation dans une plage de valeurs de référence, de préférence comprise entre 0 et 1.

6. Procédé selon l'une quelconque des revendications précédentes, dans lequel ladite détermination, pour chaque valeur de probabilité (PAq(RES), PAq(REST), PAq(GRP), PAq(GRPT), PAq(IRR), PAq(CTR), PAq(GPRD)) de l'apparition d'un phénomène d'aquaplanage, d'un poids (K1, K2, K3, K4, K5, K6, K7) comprend l'attribution d'un poids plus élevé aux valeurs de probabilité de l'apparition d'un phénomène d'aquaplanage au-dessus d'un premier seuil, et l'attribution d'un poids plus faible aux valeurs de probabilité de l'apparition d'un phénomène d'aquaplanage en dessous d'un second seuil.

7. Procédé selon l'une des revendications précédentes, dans lequel ladite pluralité d'indicateurs de conditions d'interface entre le pneu et le sol (RST, REST, GRP, GPRT, GPRD, IRR, CTR) comprend :
- un indicateur d'une résistance à l'avancement fournie par le sol (RES)
- un indicateur du type de résistance à l'avancement fournie par le sol (REST),
- un indicateur d'adhérence développée sur le sol (GRP)
- un indicateur d'une dépendance de l'adhérence à la vitesse d'avancement (GRPT)
- un indicateur de répartition d'adhérence entre l'essieu avant et l'essieu arrière (GRPD),
- un indicateur de régularité de terrain (IRR),
- un indicateur de perte de contrôle (CTR).

8. Procédé selon la revendication 7, dans lequel :
- ledit indicateur d'une résistance à l'avancement (RES) a des valeurs continues,
- ledit indicateur du type de résistance à l'avancement fournie par le sol (REST) a des valeurs discrètes représentatives, respectivement, d'une résistance constante (0) ou d'une résistance dépendant de la vitesse d'avancement (1),
- ledit indicateur d'adhérence développée sur le sol (GRP) a des valeurs variables en continu,
- ledit indicateur de dépendance de l'adhérence à la vitesse d'avancement (GRPT) a des valeurs discrètes représentatives, respectivement, d'une adhérence constante (0) ou d'une adhérence dépendant de la vitesse d'avancement (1),
- ledit indicateur de répartition d'adhérence entre l'essieu avant et l'essieu arrière (GRPD) a des valeurs variables en continu, en particulier des valeurs variables en continu entre un minimum associé à une condition d'adhérence identique entre l'essieu avant et l'essieu arrière et une valeur maximale associée à une condition d'adhérence plus élevée sur l'essieu avant par rapport à l'essieu arrière
- ledit indicateur de régularité de sol (IRR) a des valeurs variables en continu,
- ledit indicateur de perte de contrôle (CTR) a des valeurs variables en continu.

9. Procédé selon la revendication 7 ou 8, comprenant :
- la détermination d'une accélération longitudinale de référence (a_{XPTMDL}) du véhicule,
- la mesure d'une accélération longitudinale réelle du véhicule (a_{XCAN}),
- le calcul d'une différence entre ladite accélération longitudinale de référence et ladite accélération longitudinale réelle,
- la détermination d'une traînée supplémentaire (F_{D}, PWTMDL_Drag_Level) au niveau de l'interface entre le pneu et le sol sur la base de ladite différence, et d'une portance (F_{L}) au niveau de l'interface entre le pneu et le sol sur la base de ladite traînée supplémentaire (F_{D}), ladite traînée supplémentaire définissant ledit indicateur de résistance à l'avancement (RES),
- la détermination d'une force seuil à laquelle se produit un soulèvement du pneu par rapport au sol,
- la comparaison de ladite portance avec ladite force seuil et la détermination d'un degré de proximité des conditions d'interface entre le pneu et le sol par rapport à une condition d'aquaplanage.

10. Procédé selon la revendication 9, dans lequel ladite détermination d'une traînée supplémentaire (F_{D}, PWTMDL_Drag_Level) comprend la détermination de l'existence d'une dépendance de ladite résistance supplémentaire à une vitesse d'avancement du véhicule automobile (PWTMDL_Drag_Type) afin de définir ledit indicateur du type de résistance à l'avancement fournie par le sol (REST).

11. Procédé selon la revendication 7 ou 8, comprenant en outre :
- la détermination d'une force d'adhérence longitudinale du véhicule
- la détermination d'une force d'adhérence transversale du véhicule
- la définition dudit indicateur d'adhérence développée sur le sol (GRP) sur la base d'un complexe de ladite force d'adhérence longitudinale et de ladite force d'adhérence transversale (WHEMDL_LongGrip_Level, VEHMDL_LatGrip_Level).

12. Procédé selon la revendication 7 ou 8, comprenant en outre :
- la détermination d'un indicateur de glissement latéral de véhicule (VEHMDL_SideSlip_Level)
- la détermination d'un glissement longitudinal (WHEMDL_Slip_Level) des pneus de véhicule,
- la détermination dudit indicateur de perte de contrôle (CTR) sur la base dudit indicateur de glissement latéral de véhicule et dudit glissement longitudinal.

13. Procédé selon la revendication 7 ou 8, comprenant la détermination dudit indicateur de régularité de sol (IRR) par le calcul d'une variance de l'accélération verticale du véhicule automobile.

14. Procédé selon la revendication 6, comprenant en outre l'activation de l'intervention d'un système anti-aquaplanage à bord du véhicule.
